# FASCICULE DE BREVET EUROPEEN

(11) **EP 0 732 250 B1**
(45) Date de publication et mention de la délivrance du brevet: **27.08.1997**
(21) Numéro de dépôt: 95440086.7
(22) Date de dépôt: 20.12.1995
(51) Int. Cl.: B62B 5/02

(54) **Chariots de manutention adapté pour franchir des obstacles**
Lastförderwagen, angepasst zum Befahren von Hindernissen
Load-handling trolley adapted to travel over obstacles

(30) Priorité: 21.12.1994 FR 9415628
(43) Date de publication de la demande: 18.09.1996
(73) Titulaire: HAEMMERLIN S.A., F-67700 Monswiller (FR)
(72) Inventeur: Haemmerlin, Bernard, F-67700 Monswiller (FR)
(74) Mandataire: Littolff, Denis

(56) Documents cités:
- DE-A- 1 961 057
- FR-A- 649 991
- FR-A- 2 562 492
- FR-E- 86 739
- US-A- 2 363 636

## Description

La présente invention concerne un perfectionnement aux chariots de manutention à deux roues connus couramment sous le nom de "diables". Ces chariots sont constitués d'un châssis allongé, formé généralement d'un couple de longerons tubulaires réunis ensemble à l'une de leurs extrémités pour former une poignée et portant à l'autre extrémité une plate-forme de réception de charge. Juste à l'arrière de cette plate-forme, le châssis porte un couple de flasques qui supporte l'axe de rotation d'un couple de roues.

De tels chariots sont souvent utilisés pour la manutention de charges lourdes, en mettant à profit leur structure, dans laquelle, lesdites charges étant portées à l'avant, à peu de distance des roues, tandis que l'utilisateur manoeuvre le chariot au moyen des bras allongés du châssis, l'utilisateur bénéficie d'un important effet de levier facilitant ladite manutention.

Toutefois, quand ces chariots sont utilisés sur un terrain accidenté, par exemple des chantiers, ou, ce qui est fréquent, dans des bâtiments répartis sur plusieurs niveaux séparés par des marches, par exemple des caves, il se pose un problème pour faire franchir des obstacles à ces chariots, notamment quand la hauteur de ces obstacles dépasse le rayon des roues, car cela impose alors à l'utilisateur un effort important et risque en même temps de faire subir à la charge des secousses ou des chocs.

L'invention consiste à monter les roues de ces chariots, non plus directement aux extrémités de l'axe principal supporté par lesdits flasques, mais sur des pivots supportés par des bielles montées elles-mêmes pivotantes sur ledit axe principal. L'axe principal, ces deux bielles, et ces deux pivots constituent donc ensemble un système analogue à un vilebrequin articulé sur lequel sont mobiles les roues qui portent le chariot. Quand, en cours d'usage, le chariot rencontre un obstacle, c'est ce vilebrequin qui pivotera en premier lieu, soit d'un côté, soit des deux, amenant les roues à remonter le long de l'obstacle, qui devient alors facile à franchir.

Il convient de noter que des systèmes apparemment semblables ont déjà été proposés pour les brouettes. On en trouve en particulier mention aux brevets français N° 86739 et 2 562 492. Il a été également proposé pour des véhicules du genre voitures d'enfants au brevet US 2 363 636.

Toutefois, ces systèmes antérieurs avaient en réalité des structures et des finalités différentes. Ainsi, le système décrit au brevet français N° 86739 était destiné, non pas au franchissement d'obstacles, mais à faciliter la descente de trottoirs ou d'escaliers. Le système du brevet français N° 2 562 492 n'était pas non plus destiné au franchissement d'obstacles mais à faciliter le basculement vers l'avant de la brouette. Enfin, le système du brevet US N° 2 363 636, bien que présenté comme facilitant le soulèvement du véhicule, était associé à des roues beaucoup plus hautes que les obstacles à franchir, de sorte que le problème précité ne se posait pas.

La raison scientifique qui permet d'expliquer ces finalités différentes est que, s'agissant de brouettes ou de voitures d'enfants qui sont toujours "poussées" devant soi, les lois élémentaires de la mécanique conduisent à constater que, quand une roue rencontre un obstacle dont la hauteur est au moins égale au rayon de ladite roue, les forces entrant en jeu ne peuvent se décomposer qu'en une force horizontale qui s'exerce sur l'obstacle et une force verticale qui s'exerce vers le bas. Il ne peut donc se produire qu'un blocage du véhicule ainsi poussé contre l'obstacle, sans aucune possibilité de déplacement vers le haut, donc de franchissement.

Il en va tout autrement avec le système selon l'invention, car le chariot auquel est destiné ce système n'est pas "poussé", mais au contraire "tiré". ll en résulte que la même décomposition des forces fait apparaître une composante verticale dirigée vers le haut. Dès lors que cette composante s'exerce sur la (ou les) bielles précitées, elle a pour effet de faire basculer lesdites bielles vers l'avant (à l'opposé de l'obstacle rencontré), avec pour conséquence que la (ou les) roue(s) concernée(s) vont rouler sur l'obstacle en le contournant vers le haut.

En d'autres termes, au lieu d'une action de blocage du véhicule, comme dans le cas des véhicules "poussés" dans l'art antérieur, le système selon l'invention détermine, sur un chariot du type "diable" tiré par l'utilisateur, une action d'escalade de l'obstacle, qu'il devient alors aisé de franchir.

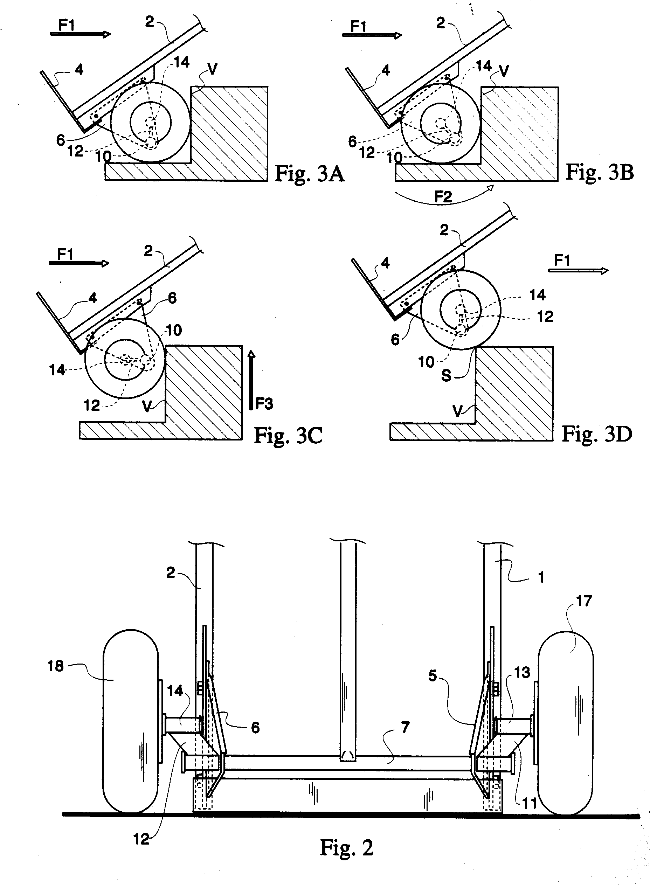

Il est vrai qu'un autre document antérieur, la demande de brevet allemand publiée en 1971 sous le N° 1 961 057 décrit bien un "diable" équipé d'un système supposé faciliter le passage de marches. Toutefois, ainsi qu'il apparaît de la figure 4 de ce document, ce système consiste, pour chaque roue, en un couple de palettes articulées entre elles de manière à provoquer, comme le montre la figure 2, une traction de la roue vers le bas, de manière telle que, la première palette (12b) rencontrant d'abord l'obstacle, la seconde palette (12a), articulée sur la première, de sorte que, les deux palettes (12a, 12b) faisant un angle aigu entre elles, faciliteraient le passage de l'obstacle.

Le processus cinématique qui intervient est complexe et peu clair, et l'ensemble ne peut être que fragile.

On notera que ce document ne précise pas dans quelle direction est manipulé le diable.

L'invention apporte une solution simple à cet ensemble de problèmes.

A cet effet, l'invention vise un chariot de manutention à deux roues du type "diable" se composant d'un châssis tubulaire constitué de deux longerons longitudinaux réunis par au moins deux entretoises transversales, lesdits longerons transversaux portant à l'avant de leurs extrémités inférieures un plateau récepteur de charge et au-dessous desdites extrémités inférieures un couple de flasques verticaux servant de support à un équipage de support rotatif, du type dans lequel ledit équipage consiste en un axe principal horizontal traversant celle desdites entretoises transversales réunissant les flasques, et sur les extrémités duquel sont montés, à l'extérieur desdits flasques, des systèmes d'embiellage latéraux comportant des ailettes pivotant chacune autour de l'un de leurs côtés horizontaux tout en demeurant constamment perpendiculaires aux plans desdits flasques, les côtés parallèles horizontaux extrêmes opposés desdits systèmes d'embiellage portant à leur tour les axes de pivotement des roues du chariot, l'effort nécessaire pour le franchissement d'un obstacle étant démultiplié par le bras de lever constitué par ledit système d'embiellage par rapport à l'axe principal,
caractérisé en ce que
chaque système d'embiellage latéral consiste en une plaquette unique indépendante en forme de parallélogramme, dont un côté horizontal pivote sur l'une des extrémités de l'axe principal, tandis que l'autre côté horizontal est décalé vers l'extérieur et porte pivotant l'axe d'une roue, ainsi maintenue à la fois écartée latéralement du châssis tubulaire et à distance constante de l'axe principal.

Comme on le verra plus loin, l'efficacité du système est la meilleure quand la distance verticale entre l'axe principal et les axes des roues est de l'ordre de la moitié du rayon d'une roue.

De même, on verra que, pour manipuler le chariot selon l'invention dans la direction où il bénéficie de cette disposition, les extrémités supérieures des longerons longitudinaux sont réunies pour former un arceau de traction incliné vers l'arrière d'environ 20° sur le plan du châssis.

On va maintenant décrire l'invention plus en détail en se référant au dessin annexé, sur lequel :
- La figure 1 est une vue en perspective du chariot selon l'invention, avec la figure 1A le montrant partiellement au repos et la figure 1B le montrant en position de passage d'une marche verticale.
- La figure 2 est une vue de face partielle, et
- Les figures 3A, 3B, 3C et 3D illustrent le comportement du système selon l'invention au passage d'une marche.

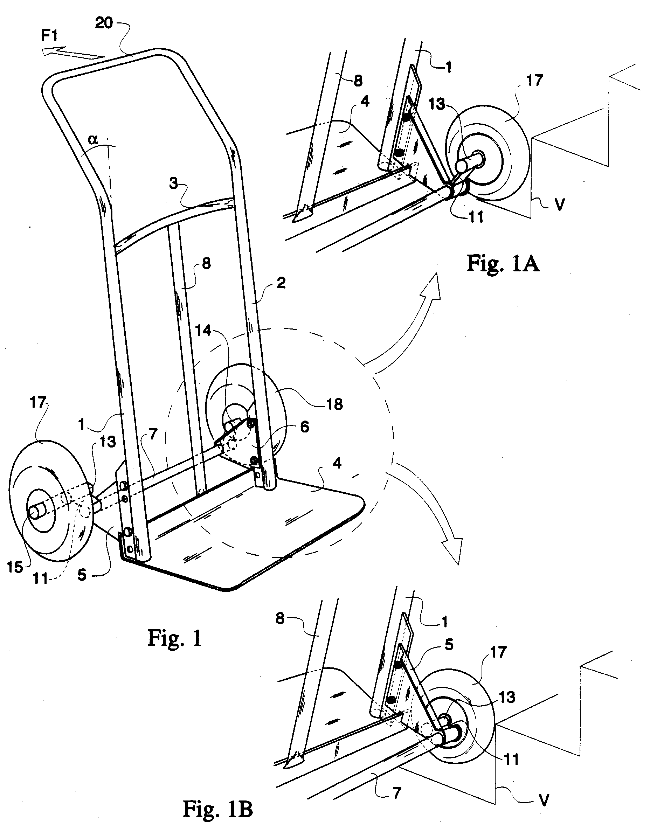

En se référant tout d'abord aux figures 1 et 2, on voir que le chariot, ou "diable" selon l'invention, se compose, de façon connue, d'un châssis d'allure générale rectangulaire, consistant en un couple de longerons tubulaires longitudinaux (1) et (2), réunis par une entretoise transversale (3), par un plateau (4), perpendiculaire à la partie inférieure dudit châssis et par un couple de flasques (5, 6) réunis transversalement par une entretoise tubulaire (7). Une entretoise verticale (8) renforce la rigidité de l'ensemble.

Selon l'invention, un équipage de support rotatif se compose d'un axe horizontal principal (10), non visible, car traversant l'entretoise (7) et dont les extrémités, dépassant les faces extérieures des flasques (5, 6) servent de pivots horizontaux à des ailettes (11, 12) en forme de parallélogrammes évasés vers l'extérieur, dont les côtés parallèles à ces pivots, (13) (14), servent à leur tour de pivots aux axes (15) et (16) des roues (17) et (18).

L'orientation des ailettes en parallélogrammes (13) et (14) permet leur débattement sur 360° tout autour de l'axe principal (10), et par suite le même débattement des roues (17) et (18).

Comme le montrent les figures 1A et 3A, à l'état de repos, le poids du diable l'entraînant vers le bas, l'axe principal (10) (à l'intérieur de l'entretoise (7)) est relativement près du sol, tandis que les ailettes (11) et (12) sont pratiquement verticales, les axes (15) et (16) étant dans leur position la plus haute.

Le diable étant manoeuvré en traction, c'est à dire dans la direction de la flèche F₁, dès qu'une roue, par exemple (17), rencontre un obstacle, par exemple la face verticale d'une marche V (figures 1B, 3B), l'ailette (12) va pivoter autour de son pivot (10), de sorte qu'en même temps l'axe (14) de ladite roue (17) va se trouver à la fois ramené vers l'avant et vers le bas, dans le sens de rotation de la flèche F₂, jusqu'à ce que l'ailette (12) étant horizontale, la roue (17) ait roulé le long de la surface verticale, dans le sens F₃ (figure 3C). La roue (17) parvient donc sans peine au sommet S de la marche V et le système, ne rencontrant plus d'obstacle, reprend l'aspect de repos, l'ailette (12) étant verticale et le pivot (14) en position haute (figure 3D).

Ce processus se répète à chaque obstacle, par exemple à chaque marche d'escalier, ce qui facilite grandement la manutention de toute charge disposée sur le plateau (4).

Cette manutention se trouve encore facilitée par la combinaison du système cinématique, qui vient d'être décrite, avec un aménagement du châssis. Selon l'invention, les longerons longitudinaux (1, 2) sont réunis à leurs extrémités supérieures de manière à constituer un arceau continu (20) dont le plan est incliné vers l'arrière d'un angle α, relativement important par rapport au plan du châssis (1, 2, 3, 8). Le point d'application de la force F₁ se trouve ainsi sensiblement décalé vers l'arrière par rapport à l'axe principal (10), ce qui accentue l'effet de levier utilisé sur les diables classiques et rappelé ci-dessus. Ainsi, dans le document antérieur constitué par la demande de brevet allemand N° 1 961 057 rappelé ci-dessus, la figure 2 illustre bien un châssis (1) terminé par une poignée (2), mais dans laquelle ladite poignée (2) est exactement dans le plan vertical dudit châssis (1).

Pour bénéficier des gains de démultiplication de l'effort à exercer pour soulever le diable et sa charge, gains résultant du système cinématique illustré notamment aux figures 3A-3D, il y a intérêt à maintenir la longueur du bras de levier constitué par chaque ailette (11, 12) relativement petite par rapport au rayon de la roue correspondante (17, 18). Dans le cadre de l'invention, la longueur de chaque ailette doit être de l'ordre de 50% de ce rayon. Par ailleurs, on peut accroître le confort du chariot en équipant chaque roue d'un pneu ballon au lieu d'un simple bandage ou d'un pneu ordinaire.

## Revendications

1. Chariot de manutention à deux roues du type "diable" se composant d'un châssis tubulaire constitué de deux longerons longitudinaux réunis par au moins deux entretoises transversales, lesdits longerons transversaux portant à l'avant de leurs extrémités inférieures un plateau récepteur de charge et au-dessous desdites extrémités inférieures un couple de flasques verticaux servant de support à un équipage de support rotatif, du type dans lequel ledit équipage consiste en un axe principal horizontal traversant celle desdites entretoises transversales réunissant les flasques, et sur les extrémités duquel sont montés, à l'extérieur desdits flasques, des systèmes d'embiellage latéraux comportant des ailettes pivotant chacune autour de l'un de leurs côtés horizontaux tout en demeurant constamment perpendiculaires aux plans desdits flasques, les côtés parallèles horizontaux extrêmes opposés desdits systèmes d'embiellage portant à leur tour les axes de pivotement des roues du chariot, l'effort nécessaire pour le franchissement d'un obstacle étant démultiplié par le bras de levier constitué par ledit système d'embiellage par rapport à l'axe principal,
caractérisé en ce que
chaque système d'embiellage latéral consiste en une plaquette unique indépendante en forme de parallélogramme, dont un côté horizontal pivote sur l'une des extrémités de l'axe principal, tandis que l'autre côté horizontal est décalé vers l'extérieur et porte pivotant l'axe d'une roue, ainsi maintenue à la fois écartée latéralement du châssis tubulaire et à distance constante de l'axe principal.

2. Chariot selon la revendication 1, caractérisé en ce que la distance verticale entre l'axe principal et les axes des roues est faible par rapport au rayon d'une roue, de préférence de l'ordre de la moitié de ce rayon.

3. Chariot selon les revendications 1 ou 2, caractérisé en ce que les extrémités supérieures des longerons longitudinaux sont réunies pour former un arceau de traction dont le plan est incliné vers l'arrière d'environ 20° sur le plan du châssis.

4. Chariot selon l'une quelconque des revendications 1-3, caractérisé en ce que les roues du chariot sont équipées de pneus de gros calibre, de manière à augmenter le confort apporté par les ailettes.

## Claims

1. Two-wheeled hand barrow of the "sack barrow" type composed of a tubular frame consisting of two longitudinal side members joined by at least two cross members, the said longitudinal side members carrying in front of their lower ends a platform for receiving a load and below the said lower ends a couple of vertical flanges serving as a support for a rotating support system, of the type in which the said system consists of a main horizontal axle passing through that of the said cross members joining the flanges, and on the ends of which are mounted, outside the said flanges, lateral linkage systems comprising lugs, each pivoting about one of the horizontal sides while remaining constantly perpendicular to the planes of the said flanges, the opposite extreme horizontal parallel sides of the said linkage systems carrying in their turn pivoting axles for the wheels of the barrow, the force necessary for crossing over an obstacle being reduced by the lever arm consisting of the linkage system in relation to the main axle,
characterized in that
each linkage system consists of a single independent plate in the form of a parallelogram, of which a horizontal side pivots on one of the ends of the main axle, while the other horizontal side is offset outwards and carries a wheel axle in a pivoting manner, being held in this way so as to be separated laterally from the tubular frame and at the same time to be kept at a constant distance from the main axle.

2. Barrow according to claim 1, characterized in that the vertical distance between the main axle and the wheel axles is small compared with the radius of a wheel, preferably of the order of half this radius.

3. Barrow according to claim 1 or 2, characterized in that the upper ends of the longitudinal side members are connected to form a pulling bow, the plane of which is inclined rearwards by around 20° to the plane of the chassis.

4. Barrow according to any of claims 1 to 3, characterized in that the wheels of the barrow are fitted with large size tyres so as to increase the comfort conferred by the lugs.

## Patentansprüche

1. Materialtransportwagen mit zwei Rädern des "Kistenkarren"-Typs, der aufgebaut ist aus einem rohrförmigen Rahmen, der aus zwei longitudinalen Trägern, die durch wenigstens zwei transversale Abstandhalter verbunden sind, gebildet ist, wobei die transversalen Träger vor ihren unteren Enden eine Lastaufnahmeplatte und unterhalb der unteren Enden ein Paar von vertikalen Flanschen tragen, welche der Unterstützung einer Drehunterstützungseinrichtung des Typs dienen, bei dem die Einrichtung aus einer horizontalen Hauptachse besteht, welche durch jene der die Flansche verbindenden transversalen Abstandhalter verläuft, und an deren Enden außerhalb der Flansche seitliche Gestängesysteme angebracht sind, die Flügel umfassen, die jeweils um eine ihrer horizontalen Seiten schwenken können und dabei stets senkrecht zu den Ebenen der Flansche bleiben, wobei die äußeren, horizontalen, parallelen Seiten gegenüber den Gestängesystemen ihrerseits die Drehachsen der Räder des Wagens tragen, wobei die für die Überwindung eines Hindernisses erforderliche Kraft um den Hebelarm verkleinert wird, der durch das Gestängesystem in bezug auf die Hauptachse gebildet wird,
dadurch gekennzeichnet, daß
jedes seitliche Gestängesystem aus einer einzigen, unabhängigen Platte in Parallelogrammform besteht, wovon eine horizontale Seite um eines der Enden der Hauptachse schwenkt, während die andere horizontale Seite nach außen versetzt ist und die Achse eines Rades drehbar trägt, welches somit zugleich in einem seitlichen Abstand vom rohrförmigen Rahmen und in einem konstanten Abstand zur Hauptachse gehalten wird.

2. Wagen nach Anspruch 1, dadurch gekennzeichnet, daß der vertikale Abstand zwischen der Hauptachse und den Achsen der Räder in bezug auf den Radius eines Rades klein ist und vorzugsweise in der Größenordnung der Hälfte dieses Radius liegt.

3. Wagen nach Anspruch 1 oder 2, dadurch gekennzeichnet, daß die oberen Enden der Längsträger so verbunden sind, daß sie einen Zugbügel bilden, dessen Ebene in bezug auf die Ebene des Rahmens um ungefähr 20° nach hinten geneigt ist.

4. Wagen nach irgendeinem der Ansprüche 1-3, dadurch gekennzeichnet, daß die Räder des Wagens mit großen Reifen ausgerüstet sind, um den von den Flügeln geschaffenen Komfort zu erhöhen.
